(19) Europäisches Patentamt
European Patent Office
Office européen des brevets

(11) **EP 2 818 229 B1**

(12) **EUROPEAN PATENT SPECIFICATION**

(45) Date of publication and mention
of the grant of the patent:
**22.11.2017 Bulletin 2017/47**

(21) Application number: **13751733.0**

(22) Date of filing: **20.02.2013**

(51) Int Cl.:
*B01D 69/10* (2006.01)    *B01D 69/12* (2006.01)
*B01D 71/48* (2006.01)    *B32B 27/12* (2006.01)
*D04H 3/011* (2012.01)    *D04H 3/16* (2006.01)
*D04H 1/435* (2012.01)    *D04H 1/54* (2012.01)
*D04H 1/55* (2012.01)    *B29L 31/00* (2006.01)
*B29K 267/00* (2006.01)    *B01D 71/68* (2006.01)
*B29C 65/00* (2006.01)    *B32B 5/26* (2006.01)

(86) International application number:
**PCT/JP2013/054190**

(87) International publication number:
**WO 2013/125583 (29.08.2013 Gazette 2013/35)**

(54) **SEPARATION MEMBRANE SUPPORT, METHOD FOR PRODUCING SAME, AND SEPARATION MEMBRANE AND FLUID SEPARATION ELEMENT USING SEPARATION MEMBRANE SUPPORT**

TRENNMEMBRANENTRÄGER, VERFAHREN ZUR HERSTELLUNG DAVON, TRENNMEMBRAN UND FLUIDTRENNUNGSVORRICHTUNG MIT DEM TRENNMEMBRANENTRÄGER

SUPPORT DE MEMBRANE DE SÉPARATION, PROCÉDÉ POUR SA FABRICATION, MEMBRANE DE SÉPARATION ET DISPOSITIF DE SÉPARATION DE FLUIDES UTILISANT LE SUPPORT DE MEMBRANE DE SÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2012 JP 2012037464**
**05.11.2012 JP 2012243876**

(43) Date of publication of application:
**31.12.2014 Bulletin 2015/01**

(73) Proprietor: **Toray Industries, Inc.**
**Tokyo 103-8666 (JP)**

(72) Inventors:
• **HANE, Ryoichi**
**Otsu-shi**
**Shiga 520-8558 (JP)**
• **HIGASHI, Masaki**
**Iyo-gun**
**Ehime 791-3193 (JP)**
• **YAMASAKI, Hitoshi**
**Iyo-gun**
**Ehime 791-3193 (JP)**
• **MATSUURA, Hiroyuki**
**Otsu-shi**
**Shiga 520-8558 (JP)**
• **YAKAKE, Yoshikazu**
**Otsu-shi**
**Shiga 520-8558 (JP)**

(74) Representative: **Prüfer & Partner mbB**
**Patentanwälte · Rechtsanwälte**
**Sohnckestraße 12**
**81479 München (DE)**

(56) References cited:
**WO-A1-97/40224      WO-A1-2004/043579**
**JP-A- 2001 162 688   JP-A- 2011 212 602**
**JP-A- 2011 212 602**

**Description**

TECHNICAL FIELD

The present invention relates to a separation membrane support comprising a nonwoven fabric for supporting separation membranes such as microfiltration membranes, ultrafiltration membranes, nanofiltration membranes, and reverse osmosis membranes and to a method for producing the separation membrane support. The present invention also relates to a separation membrane and a fluid separation element using the separation membrane support.

BACKGROUND ART

For recent water treatment, membrane technology is applied in many cases. For example, microfiltration membranes and ultrafiltration membranes are used for the water treatment in water purification plants, and reverse osmosis membranes are used for the desalination of seawater. Reverse osmosis membranes and nanofiltration membranes are used for the treatment of water for manufacturing semiconductors, water for boilers, water for medical use, pure water for laboratories, etc. For the treatment of sewage water and waste water, microfiltration membranes and ultrafiltration membranes are used to perform a membrane separation activated sludge method.

These separation membranes are roughly classified into flat membranes and hollow fiber membranes in terms of the membrane shape. A flat membrane, which is mainly formed of a synthetic polymer and has a separation function, is inferior in mechanical strength when used alone, and therefore is typically integrated with a support such as a nonwoven fabric and a woven fabric.

The membrane having a separation function and the support are typically integrated by a method of casting and fixing a solution of a polymer as a raw material of the membrane having a separation function onto a support such as a nonwoven fabric and a woven fabric. For semipermeable membranes such as reverse osmosis membranes, the membrane and the support are integrated by a method of casting a solution of a polymer onto a support such as a nonwoven fabric and a woven fabric to form a support layer and then forming a semipermeable membrane on the support layer.

The nonwoven fabric, the woven fabric, or the like used as the support is thus required to have excellent membrane formability sufficient to prevent excessive infiltration and resulting bleed-through of the casted polymer solution, peeling of the membrane substance, and defects such as inhomogeneity of or pinholes in the membrane caused by, for example, fluffing of the support. For stable production of separation membranes at a high yield, the support such as a nonwoven fabric and a woven fabric needs to have high dimensional stability sufficient to resist against the heat or tension given thereto in the production process of the separation membrane and to prevent deformation.

For easier handling of the separation membranes, fluid separation elements are used, and examples of the fluid separation element include a plate frame element of a flat membrane, a pleated element, and a spiral element. For example, when a plate frame element is used, a process of attaching a separation membrane cut into a predetermined size to a frame is required. When a spiral element is used, a process of bonding the peripheries of separation membranes cut into a predetermined size to each other to form an envelope shape and winding the membranes around a water collecting pipe. On this account, the separation membrane support needs to have high processability sufficient to keep the membrane from being bent or curled in these processes.

In the case of the semipermeable membranes such as reverse osmosis membranes that are usually used under high pressure, the support is required to have particularly high mechanical strength.

Further, regarding composite reverse osmosis membranes used for the desalination of seawater or the like, seawater desalination apparatus having a composite reverse osmosis membrane integrated thereinto may be operated at a constant operating pressure on a continuous basis or under pressure varied in response to changes in the quality or temperature of seawater supplied or to the variation in the target value of water to be generated. The latter operation is common in practice, and in the case, the variation in the operating pressure applied to the composite reverse osmosis membrane in the thickness direction causes the composite reverse osmosis membrane to repeatedly expand and shrink in the membrane thickness direction, which may result in the detachment of the support layer of the composite reverse osmosis membrane from the support. During rest of the apparatus, the forward osmosis from the permeated water side to the water supply side may cause the support layer to be detached from the support. To address such problems, the separation membrane support, when used to form a separation membrane thereon, is also required to have high peel strength.

Separation membrane supports having such performance have been proposed. For example, a separation membrane support comprises a nonwoven fabric having a multilayer structure, which is essentially composed of a dual structure comprising a front layer containing thick fibers and having large openings and a large surface roughness and a back layer containing thin fibers and having small openings and a dense structure (see Patent Literature 1). Another proposed support is a semipermeable membrane support that comprises a nonwoven fabric having an average breaking length in the machine direction (MD) and the crosswise direction (CD) at 5% elongation of 4.0 km or more and having an air permeability of 0.2 to 10.0 cc/cm$^2$·sec (see Patent Literature 2). Another proposed support is a separation membrane support that comprises two to five layers of long-fiber nonwoven fabrics composed of thermoplastic continuous filaments (see Patent Literature 3). A separation membrane comprising a base material formed by heat-treating a nonwoven fabric composed of conjugate fibers containing polypropylene as a core material and polyethylene as a sheath material is also proposed, and in the separation membrane, the nonwoven fabric has a dry-heat shrinkage of 0.5% or less under the conditions of 110°C/5 min in both length and width (see Patent Literature 4). Another proposed support is a separation membrane support that comprises a nonwoven fabric having a boiling water shrinkage of 0.1 to 5.0% in the width direction (crosswise direction) (see Patent Literature 5).

WO 97/40224 A1 is directed to a bonded nonwoven sheet made from a fibrous polyolefin material, preferably a polyethylene sheet (page 1, lines 4 and 5, page 19, lines 1 to 3, page 20, lines 8 to 11, page 21, lines 1 to 4). From the above-mentioned parts of the description of WO 97/40224 A1 it can further be derived that the polyethylene sheets are flash-spun polyethylene sheets.

JP 2011-212602 is directed to a separation membrane support comprising a nonwoven fabric having a boiling water shrinkage of 0.1% to 5.0% in the width direction. JP 2011-212602 discloses the use of a spunbonded nonwoven fabric, a meltblown nonwoven fabric, a drylaid staple nonwoven fabric, a papermaking nonwoven fabric and a composite nonwoven fabric and widen the width thereof by a pin tenter or a clip tenter. Preferably, said nonwoven fabric is heated to a temperature of 60 to 200°C and widen the width thereof by 1.01 to 1.05 times in the width direction (lateral direction). Since a pin tenter or a clip tenter take hold of both sides of the sheet when widening the width thereof, the dimension in the longitudinal direction is not changed. Therefore, also boiling water shrinkage in the longitudinal direction does not change before and after widening the width.

The literature has descriptions and suggestions on membrane formability in the production of a separation membrane and durability and dimensional stability of a separation membrane and also on the peel strength between a separation membrane and a support.

CITATION LIST

PATENT LITERATURE

[0012]

　　Patent Literature 1: JP-04-21526 B
　　Patent Literature 2: Japanese Patent No. 3153487
　　Patent Literature 3: JP-2009-61373 A
　　Patent Literature 4: JP-2001-17842 A
　　Patent Literature 5: JP-2011-212602 A

SUMMARY OF INVENTION

TECHNICAL PROBLEM

In the related art, however, there is no specific proposal or description about high dimensional stability of separation membrane supports for stably producing a separation membrane at a high yield. There is also no specific proposal or description about the characteristics and the production method of a separation membrane support for improving the peel strength. When such a separation membrane support is used, it is thus difficult to stably produce a separation membrane at a high yield. In addition, the separation membrane to be produced has insufficient peel strength, which causes a separation membrane or a support layer of a composite semipermeable membrane to be detached from the separation membrane support.

A technical object of the present invention is to provide a separation membrane support comprising a nonwoven fabric having excellent membrane formability that achieves a high and stable yield when the separation membrane support supports separation membranes such as microfiltration membranes, ultrafiltration membranes, nanofiltration membranes, and reverse osmosis membranes, having excellent processability when a fluid separation element is produced, and having excellent mechanical strength and a method for producing the separation membrane support.

Another technical object of the present invention is to provide a separation membrane and a fluid separation element using the separation membrane support and having high membrane peel strength.

SOLUTION TO PROBLEM

The present invention is intended to solve the above problems, and the separation membrane support of the present invention is a separation membrane support comprising a spunbonded nonwoven fabric, the spunbonded non-woven fabric composed of fibers made from a polyester polymer and having a boiling water shrinkage of -0.2 to 2.0% in the length direction (longitudinal direction) of the nonwoven fabric after treatment in boiling water for 5 minutes.

According to a preferred aspect of the separation membrane support of the present invention, the nonwoven fabric has a water absorption time of 15 seconds or more determined in accordance with 7.1 (Water absorption speed method), 7.1.1 (Dropping method) in JIS L 1907: 2010 "Testing methods for water absorbency of textiles" and is a nonwoven fabric having low hydrophilicity.

According to a preferred aspect of the separation membrane support of the present invention, the nonwoven fabric has a back surface having a Bekk smoothness of 5 to 35 seconds determined in accordance with JIS P 8119: 1998 "Paper and board-Determination of smoothness by Bekk method."

According to a preferred aspect of the separation membrane support of the present invention, the nonwoven fabric is a spunbonded nonwoven fabric composed of thermoplastic filaments.

According to a preferred aspect of the separation membrane support of the present invention, the nonwoven fabric is a nonwoven fabric composed of fibers made from a polyester polymer.

The separation membrane support of the present invention may be produced by any production methods and is preferably produced by the production method of the present invention described below.

Specifically, the method for producing a separation membrane support of the present invention is a method for producing a separation membrane support composed of a nonwoven fabric, the method comprising bonding a nonwoven fabric with thermocompression-bonding rolls for integrating a nonwoven fabric; and then bringing the nonwoven fabric into contact with cooling rolls at a speed ratio of 0.98 to 1.02 relative to that of the thermocompression-bonding rolls.

According to a preferred aspect of the method for producing a separation membrane support of the present invention, the cooling rolls have a surface temperature of 20 to 100°C.

According to another preferred aspect of the method for producing a separation membrane support of the present invention, the nonwoven fabric is in contact with the cooling rolls for 0.5 to 2.0 seconds.

The separation membrane of the present invention is a separation membrane prepared by forming a membrane having a separation function on a surface of the separation membrane support. According to a preferred aspect of the separation membrane, the membrane peel strength thereof is 20 to 75 cN/15 mm.

The fluid separation element of the present invention is a fluid separation element comprising the separation membrane as a constituent.

ADVANTAGEOUS EFFECTS OF INVENTION

The present invention can provide a separation membrane support comprising a nonwoven fabric. The separation membrane support has excellent membrane formability sufficient to prevent excessive infiltration and resulting bleed-through of the casted polymer solution, the detachment of a membrane substance, and defects such as pinholes in use for supporting separation membranes such as microfiltration membranes, ultrafiltration membranes, nanofiltration membranes, and reverse osmosis membranes, has excellent processability sufficient to keep the membrane from being bent or curled when used to produce a fluid separation element, and has excellent mechanical strength sufficient to prevent deformation or breakage caused by pressure or other forces applied when used in a separation membrane or a fluid separation element.

The present invention enables stable production of a separation membrane at a high yield. In the production process of the separation membrane, the dimensional change in the longitudinal direction is small. The present invention can also provide a separation membrane and a fluid separation element using the separation membrane support and having high membrane peel strength sufficient to prevent the detachment of the separation membrane from the separation membrane support caused by pressure fluctuations or the like during use.

BRIEF DESCRIPTION OF DRAWINGS

Fig. 1 is a schematic view showing a laminate-thermocompression-bonding process of a separation membrane support in an example of the present invention.

Fig. 2 is a schematic view showing a laminate-thermocompression-bonding process of a separation membrane support in another example of the present invention.

DESCRIPTION OF EMBODIMENTS

The separation membrane support of the present invention is a separation membrane support having a surface on which a membrane having a separation function is to be formed.

The separation membrane support of the present invention comprises a nonwoven fabric. Examples of the polymer of fibers constituting the nonwoven fabric in the present invention include polyester polymers, polyamide polymers, polyolefin polymers, and mixtures and copolymers of these. Among these, the polyester polymer, which can give a separation membrane support having excellent mechanical strength and durability including heat resistance, water resistance, and chemical resistance, is preferably used.

The polyester polymer is a polyester composed of an acid component and an alcohol component. Examples of usable acid components include aromatic carboxylic acids such as terephthalic acid, isophthalic acid, and phthalic acid; aliphatic dicarboxylic acids such as adipic acid and sebacic acid; and alicyclic dicarboxylic acids such as cyclohexane carboxylic acid. Examples of usable alcohol components include ethylene glycol, diethylene glycol, and polyethylene glycol.

Examples of the polyester polymer include polyethylene terephthalate, polybutylene terephthalate, polytrimethylene terephthalate, polyethylene naphthalate, polylactic acid, polybutylene succinate, and copolymers of these.

In addition, biodegradable resins are also preferably used as the polymer of fibers constituting the nonwoven fabric because the biodegradable resins are easily discarded after use and environmentally friendly. Examples of the biodegradable resin include polylactic acid, polybutylene succinate, polycaprolactone, polyethylene succinate, polyglycolic acid, and polyhydroxybutyrate. Among these, the polylactic acid is preferably used because it is a resin derived from plants, does not waste oil resources, has comparatively high mechanical characteristics and heat resistance, and is a biodegradable resin inexpensively produced. Examples of the polylactic acid preferably used in the present invention include poly(D-lactic acid), poly(L-lactic acid), copolymers of D-lactic acid and L-lactic acid, and blends of these.

The fibers constituting the nonwoven fabric in the separation membrane support of the present invention may be fibers composed of a single component, conjugate fibers composed of a plurality of components, or what is called mixed fibers prepared by mixing plural types of fibers. The separation membrane support of the present invention preferably comprises conjugate fibers composed of a low-melting polymer around a high-melting polymer having a higher melting point than that of the low-melting polymer. When bonded by thermocompression, such conjugate fibers firmly bind to each other in a nonwoven fabric. When the nonwoven fabric is used as a separation membrane support, inhomogeneity in the casting of a polymer solution caused by fluffing of the support and membrane defects can be suppressed. In addition, the conjugate fibers give a larger number of bonded points than mixed fibers prepared by mixing fibers composed of a high-melting polymer alone with fibers composed of a low-melting polymer alone, and thus a separation membrane support comprising the conjugate fibers has a higher mechanical strength.

The difference between the melting points of the high-melting polymer and the low-melting polymer is preferably 10 to 140°C. The difference of preferably 10°C or more, more preferably 20°C or more, and even more preferably 30°C or more will give thermal bondability to improve mechanical strength without impairing the strength of the internal high-melting polymer. The difference of preferably 140°C or less, more preferably 120°C or less, and even more preferably 100°C or less will suppress the productivity decline caused by the fusion of the low-melting polymer component onto a heated roll during thermocompression bonding with use of the roll.

The high-melting polymer preferably has a melting point of 160 to 320°C in terms of good membrane formability in the formation of a separation membrane on the separation membrane support of the present invention and for excellent durability. The high-melting polymer preferably has a melting point of 160°C or higher, more preferably 170°C or higher, and even more preferably 180°C or higher. A nonwoven fabric including such a high-melting polymer has excellent dimensional stability even subjected to a heating process in the production of a separation membrane or a fluid separation element. The high-melting polymer preferably has a melting point of 320°C or lower, more preferably 300°C or lower, and even more preferably 280°C or lower in terms of suppression of thermal energy consumed for melting the high-melting polymer in the production of a nonwoven fabric, that is, suppression of productivity decline.

The low-melting polymer preferably has a melting point of 120 to 250°C, more preferably 140 to 240°C, and even more preferably 230 to 240°C. When the low-melting polymer has a melting point of 120°C or higher, the thermocompression-bonded nonwoven fabric is resistant to deformation, and elongation or distortion of the nonwoven fabric due to the longitudinal tension, to which the nonwoven fabric is subjected until being wound up, can be suppressed.

Examples of the combination of the high-melting polymer and the low-melting polymer (high-melting polymer/low-melting polymer) include polyethylene terephthalate/polybutylene terephthalate, polyethylene terephthalate/polytrimethylene terephthalate, polyethylene terephthalate/polylactic acid, and polyethylene terephthalate/copolymerized polyethylene terephthalate. Examples of the copolymerization component for the copolymerized polyethylene terephthalate preferably include isophthalic acid.

The ratio of the low-melting polymer in the conjugate fiber is preferably 10 to 70% by mass in order to give a nonwoven fabric suited for the separation membrane support. When the ratio of the low-melting polymer is preferably 10% by mass or more, more preferably 15% by mass or more, and even more preferably 20% by mass or more, sufficient thermal bondability for the separation membrane support can be obtained. When the ratio of the low-melting polymer is preferably 70% by mass or less, more preferably 60% by mass or less, and even more preferably 50% by mass or less, the reduction in fiber strength due to the reduction in the amount of the high-melting polymer can be suppressed. The productivity decline caused by the fusion of the low-melting polymer component onto a heated roll during thermocompression bonding with use of the roll can also be suppressed.

The nonwoven fabric may contain additives such as a crystal nucleating agent, a matting agent, a lubricant, a pigment, a fungicide, an antimicrobial agent, and a flame retardant as long as the effect of the invention is not impaired. Specifically, metal oxides such as titanium oxide have an effect of reducing the surface friction of fibers to suppress the fusion among fibers, resulting in the improvement in spinning performance. The metal oxides also have an effect of increasing heat conductivity, resulting in the improvement in the bondability of the nonwoven fabric in the thermocompression molding with heated rolls. Aliphatic bisamides such as ethylenebisstearamide and/or alkyl-substituted aliphatic monoamides have an effect of increasing releasability between a heated roll and a web, resulting in the improvement in the bonding stability.

Examples of the conjugate form of the conjugate fibers include a concentric core-sheath conjugate type, an eccentric core-sheath type, and a sea-island type, which efficiently give thermally bonded points among fibers.

Examples of the cross section shape of fibers constituting the nonwoven fabric include a circular cross section, a planiform cross section, a polygonal cross section, a multifoil cross section, and a hollow cross section.

Specifically, concentric core-sheath conjugate fibers having a circular cross section or a planiform cross section are preferred because the fibers can be firmly bonded through thermocompression, a separation membrane support to be produced has a smaller thickness, and the area of a separation membrane can be increased per fluid separation element unit.

The fibers constituting the nonwoven fabric preferably have an average single fiber diameter of 3 to 30 $\mu$m. The fibers preferably have an average single fiber diameter of 3 $\mu$m or more, more preferably 5 $\mu$m or more, and even more preferably 7 $\mu$m or more. In such a condition, the deterioration of spinning performance in the production of a nonwoven fabric is reduced. In addition, voids in a separation membrane support can be maintained, and thus, in the membrane formation, a polymer solution cast is immediately infiltrated into the separation membrane support and firmly adheres. Consequently, a separation membrane having excellent membrane peel strength can be obtained. The fibers preferably have an average single fiber diameter of 30 $\mu$m or less, more preferably 25 $\mu$m or less, and even more preferably 20 $\mu$m or less. Such fibers can give a nonwoven fabric and a separation membrane support having excellent uniformity and can give a separation membrane support having a higher density. As a result, excessive infiltration of a polymer solution cast is suppressed, for example, and good membrane formability can be achieved.

The nonwoven fabric constituting the separation membrane support of the present invention is a spunbonded nonwoven fabric produced by spunbonding. The use of the spunbonded nonwoven fabric that is a long-fiber nonwoven fabric composed of thermoplastic filaments can suppress inhomogeneity in the casting of a polymer solution caused by fluffing or membrane defects that is often observed when a short-fiber nonwoven fabric is used. The spunbonded nonwoven fabric has excellent mechanical strength, achieves good membrane formability when used as a separation membrane support, and thus can also yield a separation membrane having excellent durability.

When the separation membrane support of the present invention is a laminate of a plurality of nonwoven fabric layers, more excellent uniformity can be achieved. In addition, the density distribution in the thickness direction of the support can be easily controlled. Examples of the form of the laminate include a laminate of two spunbonded nonwoven fabric layers and a laminate having a three-layer structure in which a meltblown nonwoven fabric is interposed between two spunbonded nonwoven fabric layers. The laminate preferably comprises at least one spunbonded nonwoven fabric layer and more preferably comprises spunbonded nonwoven fabrics alone.

The nonwoven fabric constituting the separation membrane support of the present invention preferably has a weight per unit area of 20 to 150 g/m$^2$. The weight per unit area is preferably 20 g/m$^2$ or more, more preferably 30 g/m$^2$ or more, and even more preferably 40 g/m$^2$ or more. The nonwoven fabric having such a weight per unit area suppresses excessive infiltration of a polymer solution cast, for example, and therefore can achieve good membrane formability. Further, such a nonwoven fabric has excellent dimensional stability, and can give a separation membrane having high membrane peel strength, high mechanical strength, and excellent durability. The weight per unit area is preferably 150 g/m$^2$ or less, more preferably 120 g/m$^2$ or less, and even more preferably 90 g/m$^2$ or less. Such a condition can reduce the thickness of a separation membrane and can increase the area of a separation membrane per fluid separation element unit.

The nonwoven fabric constituting the separation membrane support of the present invention preferably has a thickness of 0.03 to 0.20 mm. The nonwoven fabric preferably has a thickness of 0.03 mm or more, more preferably 0.04 mm or more, and even more preferably 0.05 mm or more. The nonwoven fabric having such a thickness suppresses excessive infiltration of a polymer solution cast, for example, and therefore can achieve good membrane formability. Further, since such a nonwoven fabric has high dimensional stability, the dimensional change in the production process of a separation membrane is small, and a membrane to be produced can be prevented from being curled or bent. Thus, excellent processability for the production of a fluid separation element can be achieved, and a separation membrane having high membrane peel strength, high mechanical strength, and excellent durability can be obtained. The nonwoven fabric preferably has a thickness of 0.20 mm or less, more preferably 0.16 mm or less, and even more preferably 0.12 mm or less. Such a condition can reduce the thickness of a separation membrane and can increase the area of a separation membrane per fluid separation element unit.

It is important that the nonwoven fabric constituting the separation membrane support of the present invention has a boiling water shrinkage of -0.2 to 2.0% in the length direction (longitudinal direction). The nonwoven fabric has a boiling water shrinkage of -0.2% or more, preferably -0.1% or more, and more preferably 0.0% or more in the length direction (longitudinal direction). The nonwoven fabric having such a boiling water shrinkage can prevent the stretching and loosening of the separation membrane support due to heat applied in the production process of a separation membrane and enables stable production of a separation membrane. The nonwoven fabric has a boiling water shrinkage of 2.0% or less, preferably 1.0% or less, and more preferably 0.5% or less in the length direction (longitudinal direction). In such a condition, the dimensional change (shrinkage) in the longitudinal direction in the production process of a separation membrane is small, and thus a separation membrane can be stably produced at a high yield. In addition, the separation membrane support can maintain the adhesiveness to a separation membrane fixed onto the support, and thus a separation membrane having high membrane peel strength can be produced.

The boiling water shrinkage in the present invention is determined as follows. Four samples having a length of 25 cm and a width of 25 cm are taken from different areas of a nonwoven fabric; on each sample, a length of 20 cm along the length direction from each of three points in the width direction (crosswise direction) is marked; each sample is immersed in boiling water for 5 minutes, then taken out, and air-dried; each of the three marked lengths of the four samples is measured with an accuracy of 0.01 cm; and the change in dimension is determined as a shrinkage ratio.

Here, a preferred embodiment for giving the nonwoven fabric having a boiling water shrinkage of -0.2 to 2.0% in the length direction (longitudinal direction) is as follows. For example, cooling rolls are provided after thermocompression-bonding rolls for integrating a nonwoven fabric; and a nonwoven fabric is brought into contact with the cooling rolls having a surface temperature of 20 to 100°C for 0.5 to 2.0 seconds at a speed ratio of 0.98 to 1.02 relative to that of the thermocompression-bonding rolls. The thermocompression-bonding rolls are a pair of upper and lower flat rolls, for example. The cooling rolls are a pair of upper and lower metal rolls, for example, between which a nonwoven fabric is passed so as to form an "S" shape. The method for controlling the surface temperature of the cooling rolls may be a method of circulating a cooling water inside the cooling rolls or a method of blowing cool air onto the surface of the cooling rolls. The method of circulating a cooling water inside the cooling rolls is preferably employed because the temperature can be more uniformly controlled. The speed ratio of the cooling rolls to the thermocompression-bonding rolls can be changed as appropriate by, for example, adjusting the speed of the cooling rolls while the speed of the thermocompression-bonding rolls is kept constant.

The nonwoven fabric constituting the separation membrane support of the present invention preferably has no hydrophilicity. The separation membrane support comprising a nonwoven fabric having no hydrophilicity can yield a separation membrane having high membrane peel strength. The mechanism is supposed as follows. A separation membrane and a separation membrane support are typically integrated by casting and fixing a polymer solution as a raw material of the separation membrane onto the separation membrane support. A method widely employed for fixing the polymer solution onto the separation membrane support comprises immersing the polymer solution cast together with the separation membrane support in a solidification liquid mainly containing water, thereby fixing the polymer solution onto the separation membrane support. At this time, the separation membrane support as the embodiment of the present invention, that is, the nonwoven fabric having no hydrophilicity appropriately suppresses the infiltration of the solidification liquid from the face opposite to the face on which the polymer solution is cast into the separation membrane support, and thus the polymer solution is sufficiently infiltrated into the separation membrane support. This allows the separation membrane to firmly adhere to the separation membrane support.

The nonwoven fabric constituting the separation membrane support of the present invention preferably has a water absorption time of 15 seconds or more, where the water absorption time is a time from dropping of a water drop onto a nonwoven fabric until the water drop is infiltrated into the nonwoven fabric and is determined in accordance with 7.1 (Water absorption speed method), 7.1.1 (Dropping method) in JIS L 1907: 2010 "Testing methods for water absorbency of textiles." The nonwoven fabric preferably has a water absorption time of 15 seconds or more, more preferably 20 seconds or more, and even more preferably 25 seconds or more. Such a nonwoven fabric suppresses an excessive infiltration of a solidification liquid mainly containing water into the separation membrane support in the production of a separation membrane, thus a polymer solution cast on the support can be sufficiently infiltrated into the support and then solidified, and consequently a separation membrane to be formed obtains higher membrane peel strength.

Here, in order to prepare the nonwoven fabric having a water absorption time of 15 seconds or more, a polyester polymer is preferably used as the polymer for the fibers constituting the nonwoven fabric, and polyethylene terephthalate and copolymers of the polyethylene terephthalate are specifically preferably used. Spunbonding and meltblowing, which necessitate no oil agents during production of a nonwoven fabric and fibers constituting a nonwoven fabric, are preferably employed as the method for producing the nonwoven fabric. Even when oil agents are used, the amount of oil agents contained in the nonwoven fabric is preferably 0.1% by mass or less, which can be achieved by minimizing the amount of the oil agents used or by washing or drying the nonwoven fabric after production to remove the oil agents.

The nonwoven fabric constituting the separation membrane support of the present invention preferably has a back surface (a face opposite to the face on which a membrane is to be formed) having a Bekk smoothness of 5 to 35 seconds determined in accordance with JIS P 8119: 1998 "Paper and board-Determination of smoothness by Bekk method." The back surface of the nonwoven fabric preferably has a Bekk smoothness of 5 seconds or more, more preferably 10 seconds or more, and even more preferably 15 seconds or more. Such a nonwoven fabric suppresses an excessive infiltration of a solidification liquid mainly containing water from the back surface into the separation membrane support in the production of a separation membrane, thus a polymer solution cast on the support can be sufficiently infiltrated into the support and then solidified, and consequently a separation membrane to be formed obtains higher membrane peel strength. Such a nonwoven fabric also prevents the surface of a separation membrane from suffering scratches caused by abrasion between the face with a membrane and the back surface in a winding process in the production of a separation membrane. The back surface of the nonwoven fabric preferably has a Bekk smoothness of 35 seconds or less, more preferably 30 seconds or less, and even more preferably 25 seconds or less. In such a condition, air in the separation membrane support is immediately discharged in the production of a separation membrane, and this can suppress a partial reduction in the membrane peel strength and also prevent membrane defects such as pinholes.

Here, in order to prepare a nonwoven fabric having the back surface with a Bekk smoothness of 5 to 35 seconds, the thermocompression bonding method for integrating a nonwoven fabric is preferably a method of bonding a nonwoven fabric by thermocompression with a pair of upper and lower flat rolls. The pair of upper and lower flat rolls are preferably a metal roll and an elastic roll in a pair, and the elastic roll preferably comes in contact with the back surface of the nonwoven fabric. The elastic roll preferably has a hardness (Shore D) of 70 to 99 in order to prepare the nonwoven fabric having the back surface with a Bekk smoothness of 5 to 35 seconds.

Next, the method for producing a separation membrane support of the present invention will be described.

In the present invention, when the fibers constituting the nonwoven fabric are conjugate fibers such as core-sheath conjugate fibers, a common conjugate method can be adopted.

To produce a nonwoven fabric by spunbonding, a thermoplastic polymer melt is extruded through nozzles and drawn by suction with a high-speed suction gas to be spun into fibers, then the resulting fibers are collected on a moving conveyer to form a fibrous web, and the fibrous web is successively subjected to thermocompression bonding and other treatments to be integrated, thus yielding a long-fiber nonwoven fabric. At this time, in terms of achieving high dimensional stability against heat applied in the production process of a separation membrane, highly oriented and crystallized fibers should be obtained for constituting the fibrous web. For this purpose, the spinning speed is preferably 2,000 m/min or more, more preferably 3,000 m/min or more, and even more preferably 4,000 m/min or more.

To produce a nonwoven fabric by meltblowing, a thermoplastic polymer melt can be drawn into ultrafine fibers with use of a heated high-speed gas stream blown thereonto, and the ultrafine fibers can be collected to form a long-fiber nonwoven fabric.

To produce a short-fiber nonwoven fabric, preferred is a method of cutting long fibers into short fibers and subjecting the short fibers to a dry method or a wet method to form a nonwoven fabric.

As for the method for producing a laminate of the nonwoven fabrics, for example, the method for producing a laminate composed of two nonwoven fabric layers is preferably a method of separately preparing two temporarily bonded nonwoven fabrics with use of a pair of rolls, then placing one nonwoven fabric onto the other, and integrating them by thermocompression-bonding.

As for the method for producing a laminate having a three-layer structure in which a meltblown nonwoven fabric is interposed between two spunbonded nonwoven fabric layers, preferred are a method of separately preparing two temporarily bonded spunbonded nonwoven fabrics with use of a pair of rolls, then placing one nonwoven fabric onto the other and interposing therebetween a meltblown nonwoven fabric that has been separately prepared, and integrating them by thermocompression-bonding and a method of successively collecting and laminating, on a collecting conveyor, respective fibrous webs extruded from a nozzle for spunbonding, a nozzle for melt blowing, and a nozzle for spunbonding each provided over the conveyor, and bonding the webs by thermocompression.

For a dry short-fiber nonwoven fabric and a nonwoven fabric made by papermaking process, preferred is a method of placing a plurality of once wound nonwoven fabric layers on top of another and then integrating the layers by thermocompression-bonding.

In order to produce a nonwoven fabric that does not largely change in dimension in the production process of a separation membrane and has good membrane formability in the production of a separation membrane and to produce a separation membrane that has excellent mechanical strength, durability, and membrane peel strength, the method of thermocompression bonding for integrating a nonwoven fabric is preferably a method of performing uniform thermocompression bonding of the whole area of a nonwoven fabric with use of a pair of upper and lower flat rolls to integrate the nonwoven fabric because the method provides a smooth surface and excellent mechanical strength. The flat roll is a metal roll or an elastic roll having a surface without unevenness. The pair may be consists of, for example, a metal roll and another metal roll, or a metal roll and an elastic roll. In particular, a nonwoven fabric is preferably bonded by thermocompression with a heated metal roll and a heated elastic roll because the method suppresses the fusion of fibers on the surface of a nonwoven fabric to maintain the shape, thus can prevent large dimensional change in the production process of a separation membrane, and can improve the membrane peel strength of a separation membrane when the nonwoven fabric is used as the separation membrane support. In addition, the surface of a nonwoven fabric that has been in contact with the metal roll is preferably used as the surface of a separation membrane support on which a membrane is to be formed and the other surface that has been in contact with the elastic roll is preferably used as the back surface of the separation membrane support because such a separation membrane support can improve the membrane peel strength of a separation membrane and can suppress an excessive infiltration of a polymer solution cast on the support in the production of a separation membrane.

Here, the elastic roll is a roll made of a material having elasticity as compared with the metal roll. Examples of the elastic roll include what are called paper rolls made of paper, cotton, aramid paper, and similar materials and resin rolls made of a urethane resin, an epoxy resin, a silicon resin, a polyester resin, a hard rubber, other resins, and mixtures of these.

The elastic roll preferably has a hardness (Shore D) of 70 to 99. The elastic roll preferably has a hardness (Shore D) of 70 or more, more preferably 75 or more, and even more preferably 80 or more. When the elastic roll is used to prepare a nonwoven fabric and a surface that has been in contact with the elastic roll is used as the back surface of a separation membrane support, such a condition can improve the smoothness of the back surface of the separation membrane support and can suppress an excessive infiltration of a solidification liquid mainly containing water from the back surface of the separation membrane support into the separation membrane support in the production of a separation membrane. This allows a polymer solution cast on the support to be sufficiently infiltrated into the support and then to be solidified. Consequently, a separation membrane to be formed obtains higher membrane peel strength. The elastic roll preferably has a hardness (Shore D) of 99 or less, more preferably 95 or less, and even more preferably 91 or less. When the elastic roll is used to prepare a nonwoven fabric and the surface that has been in contact with the elastic roll is used as the back surface of a separation membrane support, such a condition can suppress an excessive improvement in smoothness of the back surface of the separation membrane support, thus a solidification liquid mainly containing water can be infiltrated into the separation membrane support in the production of a separation membrane, and this can suppress an excessive infiltration of a polymer solution cast on a surface on which a membrane is to be formed, that is, can suppress bleed-through.

The conformation of two or more flat rolls is preferably a system of two pairs of two rolls or three pairs of two rolls in which two or more pairs of a metal roll/an elastic roll are used in a continuous manner or a discontinuous manner or a three-roll system of an elastic roll/a metal roll/an elastic roll, an elastic roll/a metal roll/a metal roll, or a metal roll/an elastic roll/a metal roll.

By using the system of two pairs of two rolls, heat and pressure can be applied to a nonwoven fabric twice, and this can achieve easy control of the characteristics of the nonwoven fabric and can increase the speed of production. In addition, for example, an elastic roll may be used as the lower roll of the first pair of two rolls and another elastic roll may be used as the upper roll of the second pair of two roll. In other words, a surface coming into contact with the elastic roll can be easily reversed, and by this, the surface characteristics of the front and back surfaces of the nonwoven fabric can easily be controlled.

By using the three-roll system, i.e., by using a system of an elastic roll 1/a metal roll/an elastic roll 2, for example, a nonwoven fabric can be bonded between the elastic roll 1 and the metal roll by thermocompression, then turned, and further bonded between the metal roll and the elastic roll 2 by thermocompression. Consequently, heat and pressure can be applied to the nonwoven fabric twice as with the system of two pairs of two rolls. In addition, the three-roll system can save the cost and the space for equipment as compared with the system of two pairs of two rolls.

In a production method using two or more elastic rolls, the elastic roll to come into contact with a nonwoven fabric in the first step may have a different hardness (Shore D) from that of the other elastic roll in the second step.

The metal roll preferably has a surface temperature of 150 to 210°C. The metal roll preferably has a surface temperature of 150°C or higher and more preferably 170°C or higher. Such a metal roll can firmly bond fibers constituting the nonwoven fabric to each other and makes the nonwoven fabric have higher density, and this structure can give a separation membrane support having excellent mechanical strength. The metal roll preferably has a surface temperature of 210°C or lower and more preferably 190°C or lower. Such a metal roll can suppress an excessive fusion of the surface fibers of a nonwoven fabric, thus a polymer solution readily infiltrates, and this can give a separation membrane support having excellent membrane peel strength. When a nonwoven fabric is integrated by thermocompression bonding with use of a pair of upper and lower flat rolls and then the nonwoven fabric is cooled with use of cooling rolls, the metal roll preferably has a surface temperature of 210°C or lower and more preferably 190°C or lower. In such a condition, the cooling rolls can sufficiently cool and solidify the nonwoven fabric, and this can suppress elongation or distortion of the nonwoven fabric due to the longitudinal tension, to which the nonwoven fabric is subjected until being wound up.

The metal roll preferably has a surface temperature 20 to 80°C lower than the melting point of a polymer of fibers at least constituting the surface of the nonwoven fabric. If the surface temperature of the metal roll is lower than the temperature that is 20°C lower than the melting point of a polymer of fibers at least constituting the surface of the nonwoven fabric, the metal roll can suppress an excessive fusion of the surface fibers of a nonwoven fabric, thus a polymer solution readily infiltrates, and this can give a separation membrane support having excellent membrane peel strength. The difference between the surface temperature of the metal roll and-the melting point of a polymer of fibers at least constituting the surface of the nonwoven fabric is preferably 80°C or less and more preferably 40°C or less. Such a condition can firmly bond fibers constituting the nonwoven fabric to each other and makes the nonwoven fabric have higher density, and this can give a separation membrane support having excellent mechanical strength. Such a condition can also achieve good membrane formability, that is, the dimensional change in the production process of a separation membrane is small, and an excessive infiltration of a polymer solution cast, or the like can be suppressed.

In another preferred embodiment, a difference in temperature is provided between the metal roll and the elastic roll, and the elastic roll has a surface temperature 10 to 120°C lower than the surface temperature of the metal roll.

The method of heating the metal roll is preferably an induction heating system or a heating medium circulation system, for example. The temperature difference in the width direction of a nonwoven fabric relative to a median value is preferably within ± 3°C and more preferably within ± 2°C to obtain a separation membrane support having excellent uniformity.

The method of heating the elastic roll is, for example, preferably a contact heating system in which the elastic roll comes into contact with a heated metal roll upon pressurization and a non-contact heating system that uses an infrared heater or a similar heater and can more accurately control the Surface temperature of the elastic roll. The temperature difference of the elastic roll in the width direction of a nonwoven fabric relative to a median value is preferably within ± 10°C and more preferably within ± 5°C. In order to more accurately control the temperature difference of the elastic roll in the width direction of a nonwoven fabric, infrared heaters or other heaters are preferably installed apart in the width direction, and each output power of the heaters is appropriately adjusted.

The flat roll preferably has a linear pressure of 196 to 4,900 N/cm. The flat roll preferably has a linear pressure of 196 N/cm or more, more preferably 490 N/cm or more, and even more preferably 980 N/cm or more. Such a flat roll can firmly bond fibers constituting the nonwoven fabric to each other and makes the nonwoven fabric have higher density, and this can give a separation membrane support having excellent mechanical strength. Such a flat roll can also achieve good membrane formability, that is, the dimensional change in the production process of a separation membrane is small, and an excessive infiltration of a polymer solution cast, or the like can be suppressed. The flat roll preferably has a linear pressure of 4,900 N/cm or less. Such a flat roll can suppress an excessive fusion of the surface fibers of a nonwoven fabric without blocking the infiltration of a polymer solution into the nonwoven fabric, and this can give a separation membrane support having excellent membrane peel strength.

In another preferred embodiment of the method for producing a separation membrane support of the present invention, a nonwoven fabric is integrated by thermocompression-bonding, for example, with a pair of upper and lower flat rolls, and then is cooled with cooling rolls. At this time, the cooling roll preferably has a temperature of 20 to 100°C. The cooling roll preferably has a temperature of 20°C or higher, more preferably 25°C or higher, even more preferably 30°C or higher, and still more preferably 40°C or higher. Such cooling rolls can suppress distortion caused by rapid, uneven cooling of a nonwoven fabric that has a large unevenness in thickness. The cooling roll preferably has a temperature of 100°C or lower, more preferably 90°C or lower, even more preferably 80°C or lower, still more preferably 60°C or lower, and still even more preferably 50°C or lower. Such cooling rolls can sufficiently cool and solidify a nonwoven fabric, and this can suppress elongation or distortion of the nonwoven fabric due to the longitudinal tension, to which the nonwoven fabric is subjected until being wound up.

At this time, the nonwoven fabric is preferably in contact with the cooling rolls for 0.5 to 2.0 seconds. The contact time of the nonwoven fabric with the cooling rolls is preferably 0.5 second or more, more preferably 0.7 second or more, and even more preferably 0.9 second or more. Such a condition can sufficiently cool and solidify a thermocompression-bonded nonwoven fabric, and this can suppress elongation or distortion of the nonwoven fabric due to the longitudinal tension, to which the nonwoven fabric is subjected until being wound up. The contact time of the nonwoven fabric with the cooling rolls is preferably 2.0 seconds or less, more preferably 1.9 seconds or less, and even more preferably 1.8 seconds or less. Such a condition does not reduce the production speed of a nonwoven fabric or necessitate a cooling roll having an excessively large diameter, and thus can reduce the production cost of a nonwoven fabric.

In another preferred embodiment of the method for producing a separation membrane support of the present invention, the speed ratio of the cooling rolls and the thermocompression-bonding rolls such as a pair of upper and lower flat rolls is appropriately changed. At this time, the speed ratio of the cooling roll to the thermocompression-bonding roll is preferably 0.98 to 1.02. The speed ratio of the cooling roll to the thermocompression-bonding roll is preferably 0.98 or more and more preferably 0.99 or more. This can prevent a nonwoven fabric after the thermocompression bonding from becoming loose or from winding around the thermocompression-bonding roll, resulting in stable production of a nonwoven fabric. The speed ratio of the cooling roll to the thermocompression-bonding roll is preferably 1.02 or less and more preferably 1.01 or less. This can suppress longitudinal elongation or distortion of a nonwoven fabric after the thermocompression bonding, and thus the nonwoven fabric obtains a boiling water shrinkage of 2.0% or less in the length direction (longitudinal direction). When the dimensional change (shrinkage) in the length direction in the production process of a separation membrane is as above, a separation membrane can stably be produced at a high yield. In addition, the separation membrane support can maintain the adhesiveness to a separation membrane fixed onto the support, and thus a separation membrane having high membrane peel strength can be produced.

In the method for producing a separation membrane support of the present invention, two to five nonwoven fabric layers laminated are preferably integrated by thermocompression bonding. A separation membrane support comprising two or more laminated layers has better texture than that of a separation membrane support comprising only a single layer and obtains sufficient uniformity. A separation membrane support comprising five or less laminated layers can be prevented from having wrinkles during lamination and from suffering delamination.

In the method for thermocompression bonding of a spunbonded nonwoven fabric, a two-step adhesion system may be employed for more precise controlling of the characteristics of a nonwoven fabric in place of the thermocompression bonding of a nonwoven fabric with a pair of flat rolls alone. In other words, a nonwoven fabric is preliminarily thermocompression-bonded between a pair of flat rolls or between a flat roll and a collecting conveyor used for collecting fibrous webs, giving a temporarily bonded nonwoven fabric. In a continuous process or after the temporarily bonded nonwoven fabric is wound up, the nonwoven fabric is bonded by thermocompression between flat rolls once again. Such a two-step adhesion system is also preferably adopted.

In the two-step adhesion system, the preliminary thermocompression bonding in the first step preferably gives the temporarily bonded nonwoven fabric having a packing density of 0.1 to 0.3, and the thermocompression bonding in the second step can make the nonwoven fabric have a higher density. At this time, the flat roll used for the preliminary thermocompression bonding in the first step preferably has a temperature 20 to 120°C lower than the melting point of fibers constituting the nonwoven fabric and preferably has a linear pressure of 49 to 686 N/cm.

The separation membrane of the present invention is a separation membrane prepared by forming a membrane having a separation function on the separation membrane support. Examples of the separation membrane include semipermeable membranes including microfiltration membranes and ultrafiltration membranes used for the water treatment in water purification plants and the production of water for industrial processes, for example; and including nanofiltration membranes and reverse osmosis membranes used for the treatment of water for manufacturing semiconductors, water for boilers, water for medical use, a pure water for laboratories, etc. and used for the desalination treatment of seawater. The method for producing the separation membrane is preferably a method of casting a polymer solution on at least one surface of the separation membrane support to form a membrane having a separation function, thus yielding a separation membrane. To produce a semipermeable membrane as the separation membrane, preferred is a method of stacking a composite membrane comprising a support layer and a semipermeable membrane layer as the membrane having a separation function on at least one surface of the separation membrane support.

The polymer solution cast on the separation membrane support of the present invention contains a substance providing a separation function after formed into a membrane, and preferable examples of the polymer solution include solutions of polysulfone, polyarylethersulfones such as polyethersulfone, polyimide, polyvinylidene fluoride, and cellulose acetate. Among these, solutions of polysulfone and polyarylethersulfone are particularly preferably used in terms of chemical, mechanical, and thermal stabilities. An appropriate solvent can be selected depending on the membrane forming substance. The semipermeable membrane as the separation membrane that is a composite membrane comprising a support layer and a semipermeable membrane layer is preferably a cross-linked polyamide membrane prepared by polycondensation of a polyfunctional acid halide and a polyfunctional amine, for example.

The separation membrane of the present invention preferably has a membrane peel strength of 20 to 75 cN/15 mm. The membrane peel strength is preferably 20 cN/15 mm or more, more preferably 30 cN/15 mm or more, and even more preferably 35 cN/15 mm or more. This can prevent the detachment of the separation membrane used in a fluid separation element from the support caused by the variation in the operating pressure or by what is called back washing for washing the separation membrane. The membrane peel strength is preferably 75 cN/15 mm or less, more preferably 70 cN/15 mm or less, and even more preferably 65 cN/15 mm or less. This can suppress an excessive consumption of a polymer solution during production of the separation membrane. The membrane peel strength of the separation membrane that is the composite membrane comprising a support layer and a semipermeable membrane layer is a peel strength between the separation membrane support and the support layer that is directly bonded to the separation membrane support.

The fluid separation element of the present invention is a fluid separation element comprising the separation membrane stored in a casing for easy handling of the separation membrane in the case where, for example, the separation membrane is integrated with a seawater desalination apparatus. Examples of the configuration of the fluid separation element include a plate frame element of a flat membrane, a pleated element, and a spiral element. Among these, specifically preferably used is the spiral element in which the separation membrane is wound around a water collecting pipe in a spiral manner together with a permeated liquid flow path material and a feed liquid flow path material. A plurality of fluid separation elements may be connected in series or in parallel to form a separation membrane unit.

EXAMPLES

Measurement Method

(1) Melting point (°C)

Measurement was performed at a temperature increase rate of 20°C/min using a differential scanning calorimeter DSC-2 manufactured by Perkin Elmer, and a temperature taking the extreme value on a melting endothermic curve obtained was considered as the melting point. A resin of which melting endothermic curve obtained with a differential scanning calorimeter failed to indicate the extreme value was heated on a hot plate, and a temperature at which the resin was completely melted under a microscope was regarded as the melting point.

(2) Intrinsic viscosity IV

The intrinsic viscosity IV of a polyethylene terephthalate resin was determined by the method below. In 100 ml of o-chlorophenol, 8 g of a sample was dissolved, and the relative viscosity $\eta_r$ was determined at a temperature of 25°C with an Ostwald viscometer in accordance with the equation below.

$$\eta_r = \eta/\eta_0 = (t \times d)/(t_0 \times d_0)$$

$\eta$:    viscosity of a polymer solution
$\eta_0$:    viscosity of o-chlorophenol
$t$:    falling time of a solution (sec)
$d$:    density of a solution (g/cm$^3$)
$t_0$:    falling time of o-chlorophenol (sec)
$d_0$:    density of o-chlorophenol (g/cm$^3$)

Next, on the basis of the relative viscosity $\eta_r$, the intrinsic viscosity IV was calculated in accordance with the equation below.

$$IV = 0.0242\eta_r + 0.2634$$

(3) Average single fiber diameter ($\mu$m)

Ten small samples were taken from a nonwoven fabric in a random manner, and photographs were taken at a magnification of 500 to 3,000 under a scanning electron microscope. Ten single fibers in each sample, 100 single fibers in total, were selected, and the diameter of each single fiber was determined. An average of the diameters was rounded to an integer.

(4) Weight per unit area of nonwoven fabric (g/m$^2$)

Three nonwoven fabrics having a size of 30 cm x 50 cm were prepared, and each sample was weighed. An average of the weights obtained was converted into a weight per unit area, and the converted value was rounded to an integer.

(5) Thickness of nonwoven fabric (mm)

In accordance with 5.1 in JIS L 1906: 2000 "Test methods for non-woven fabrics made of filament yarn", thicknesses at 10 locations equally spaced in the width direction in 1 m of a nonwoven fabric were measured in units of 0.01 mm at a load of 10 kPa applied by using an indenter with a diameter of 10 mm, and an average of the thicknesses was rounded to two decimal places.

(6) Boiling water shrinkage of nonwoven fabric (%)

Four samples having a length of 25 cm and a width of 25 cm were taken from different areas in a nonwoven fabric. On each sample, a length of 20 cm along the length direction (longitudinal direction) from each of three points in the width direction (crosswise direction) is marked. Each sample was immersed in boiling water for 5 minutes, then taken out, and air-dried. Each of the three marked lengths of the four samples was measured with an accuracy of 0.01 cm. The sum of the lengths obtained from four samples was applied to the equation below, and the calculated value was rounded to an integer, giving the thermal shrinkage ratio.

$$\texttt{Boiling water shrinkage (\%) = ((L1 - L2)/L1)} \times \texttt{100}$$

L1 and L2 are as below.
L1: Sum of lengths of three lines before immersion (sum of four samples) (cm)
L2: Sum of lengths of three lines after immersion (sum of four samples) (cm)

(7) Water absorption time of nonwoven fabric (sec)

As the hydrophilicity of a nonwoven fabric, a water absorption time was determined in accordance with 7.1 (Water absorption speed method), 7.1.1 (Dropping method) in JIS L 1907: 2010 "Testing methods for water absorbency of textiles." Specifically, five nonwoven fabrics having a size of 20 cm x 20 cm were taken, and each sample was fixed to a holding frame having a diameter of 15 cm and a height of 1 cm. Above the fixed sample, a buret was set so that the distance between the leading end of the buret and the surface of the sample would be 1 cm, and a water drop was dropped from the buret. The time from the arrival of the drop at the sample surface until a mirror reflection disappeared as the sample absorbed the drop to leave wetting alone was measured with a stopwatch by seconds. Respective times were measured on the front and back surfaces of 5 samples. An average of the obtained values was rounded to one decimal place, giving each water absorption time of the front and back surfaces of the nonwoven fabrics. A sample having a water absorption time of less than 15 seconds was regarded as a hydrophilic nonwoven fabric, and a sample having a water absorption time of 15 seconds or more was regarded as a non-hydrophilic nonwoven fabric. Here, a surface on which a membrane is to be formed is the front surface of a nonwoven fabric to be used as a separation membrane support, and the other surface on which no membrane is to be formed is the back surface.

(8) Bekk smoothness of nonwoven fabric (sec)

In accordance with JIS P 8119: 1998 "Paper and board-Determination of smoothness by Bekk method", Bekk smoothness was determined with use of a Bekk smoothness tester at five locations on each of the front surface and the back surface of a nonwoven fabric. An average of five Bekk smoothness values was rounded to an integer, giving each Bekk smoothness of the front and back surfaces. Here, a surface on which a membrane is to be formed is the front surface of a nonwoven fabric to be used as a separation membrane support, and the other surface on which no membrane is to be formed is the back surface.

(9) Degree of bleed-through of cast liquid during membrane formation

The back surface of a polysulfone membrane prepared was visually observed, and the degree of bleed-through of a cast liquid was rated on the following scale of 1 to 5. Score 4 or more means "acceptable".
Score 5: There is no bleed-through of a cast liquid.
Score 4: There is a little bleed-through of a cast liquid (area ratio less than 5%).
Score 3: There is bleed-through of a cast liquid (area ratio between 5% and 50%).
Score 2: There is bleed-through of a cast liquid in most area (area ratio between 51% and 80%).
Score 1: There is bleed-through of a cast liquid in almost whole area.

(10) Membrane peel strength (cN/15 mm)

A polysulfone membrane produced was cut into a sample having a width of 15 mm. At one end of the sample, the polysulfone layer was peeled away from the separation membrane support. The polysulfone layer was fixed to one grip of a constant-rate-extension tensile tester, and the separation membrane support was fixed to the other grip. Strengths at five locations were determined in the longitudinal direction and in the crosswise direction under the conditions of a length of sample between grips of 50 mm and a tensile speed of 50 mm/min. An average of strengths from stabilization of the strength until the length of sample between grips became 65 mm was calculated and rounded to an integer, giving each membrane peel strength in the longitudinal direction and the crosswise direction. An average of the membrane peel strengths in the longitudinal direction and the crosswise direction was rounded to an integer, giving the membrane peel strength of the separation membrane.

(11) Depression amount of separation membrane ($\mu$m)

A feed liquid flow path material comprising a polypropylene net, a reverse osmosis membrane for desalination of seawater, a pressure-proof sheet, and the following permeated liquid flow path material were used to prepare a spiral fluid separation element having an effective area of 40 m$^2$.

Permeated liquid flow path material

A polyester single tricot (double denbigh stitch) used had a groove width of 200 $\mu$m, a groove depth of 150 $\mu$m, a groove density of 40/inch, and a thickness of 200 $\mu$m.
Next, a fluid separation element prepared was subjected to a durability test under the conditions of a reverse osmotic pressure of 7 MPa, a salt concentration of seawater of 3 wt%, and an operation temperature of 40°C. After 1,000-hour operation, the fluid separation element was disassembled. The adhesion between the membrane and the support was observed, and a depression amount of the separation membrane into the permeated liquid flow path material was measured. Photographs of separation membrane cross sections at three different locations of a fluid separation element were taken at a magnification of 500 to 3,000 times under a scanning electron microscope, and depression amounts were measured (unit: $\mu$m). An average of the depression amounts was rounded to an integer. The separation membrane support was placed on the permeated liquid flow path material so that the width direction (crosswise direction) of the nonwoven fabric of the separation membrane support would be perpendicular to the groove direction of the permeated liquid flow path.

Example 1

Core component

A polyethylene terephthalate resin that had been dried to a water content of 10 ppm and had an intrinsic viscosity IV of 0.65, a melting point of 260°C, and a titanium oxide content of 0.3% by mass was used as a core component.

Sheath component

A copolymerized polyethylene terephthalate resin that had been dried to a water content of 10 ppm and had an intrinsic viscosity IV of 0.66, an isophthalic acid copolymerization ratio of 11% by mol, a melting point of 230°C, and a titanium oxide content of 0.2% by mass was used as a sheath component.

Spinning, collection of fibrous web

The core component and the sheath component were melted at temperatures of 295°C and 270°C, respectively, and were combined in a core/sheath mass ratio of 80/20 at a spinneret temperature of 300°C and extruded from pores into concentric core-sheath conjugate fibers (with a round cross section). The extruded fibers were then spun with an ejector at a spinning speed of 4,400 m/min and collected as fibrous webs on a moving net conveyor.

Preliminary thermocompression bonding

The collected fibrous webs were passed between a pair of upper and lower metal flat rolls each at a surface temperature of 140°C at a linear pressure of 588 N/cm, and thus preliminary thermocompression bonding was performed, yielding a temporarily bonded spunbonded nonwoven fabric (a) having a fiber diameter of 10 $\mu$m, a weight per unit area of 38 g/m$^2$, and a thickness of 0.16 mm.

Thermocompression bonding of laminate

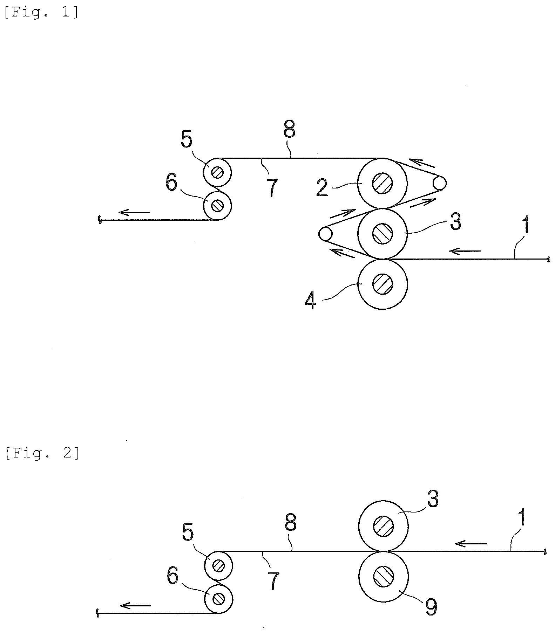

Two temporarily bonded spunbonded nonwoven fabrics (a) obtained were placed one on top of the other. As shown in Fig. 1, a set of three flat rolls comprising an upper resin elastic roll (2) having a hardness (Shore D) of 91, a middle metal roll (3), and a lower resin elastic roll (4) having a hardness (Shore D) of 75 was used, and the nonwoven fabric laminate (1) was passed between the middle roll and the lower roll and thereby bonded by thermocompression. The nonwoven fabric laminate (1) was turned and then passed between the upper roll and the middle roll and thereby bonded by thermocompression. The thermocompression-bonded nonwoven fabric laminate (1) was passed between a pair of upper and lower metal cooling rolls (5, 6) each at a surface temperature of 60°C so as to form an "S" shape. First, the surface (back surface) (7), which had been in contact with the elastic rolls (2, 4), of the thermocompression-bonded nonwoven fabric laminate (1) was brought into contact with the upper roll (5) for 0.5 second; and subsequently, the surface (front surface) (8), which had been in contact with the metal roll (3), of the thermocompression-bonded nonwoven fabric laminate (1) was brought into contact with the lower roll (6) for 0.5 second (that is, the thermocompression-bonded nonwoven fabric laminate (1) was in contact with the cooling rolls for 1.0 second in total), thus yielding a spunbonded nonwoven fabric having a weight per unit area of 76 g/m$^2$, a thickness of 0.09 mm, a boiling water shrinkage in the longitudinal direction of 0.4%, a water absorption time of 60 seconds or more, and a Bekk smoothness of a back surface of 15 seconds as a separation membrane support. At this time, as for the surface temperatures of three flat rolls, the upper roll (2) had a surface temperatures of 100°C, the middle roll (3) had a surface temperatures of 180°C, and the lower roll (4) had a surface temperatures of 130°C.

The linear pressure was 1,715 N/cm. The speed ratio of the cooling rolls (5, 6) to the three flat rolls (2, 3, 4) was 1.00.

Formation of separation membrane

Polysulfone membrane

The obtained separation membrane support having a width of 50 cm and a length of 10 m was wound off at a speed of 12 m/min. On the separation membrane support, a solution (cast liquid) of 16% by mass polysulfone ("Udel" (registered trademark) P3500 manufactured by Solvay Advanced Polymers) in dimethylformamide was cast at room temperature (20°C) so as to give a thickness of 50 $\mu$m. The separation membrane support with the cast liquid was immediately immersed in pure water at room temperature (20°C) for 10 seconds, next immersed in pure water at a temperature of 75°C for 120 seconds, subsequently immersed in pure water at a temperature of 90°C for 120 seconds, and then wound up at a tension of 100 N/full-width, thus yielding a polysulfone membrane. At this time, no bleed-through of the cast liquid was observed, the ratio of the formed separation membrane length/the wound-off support length was 0.998, and the produced separation membrane had a membrane peel strength of 54 cN/15 mm. Table 1 and Table 2 show the results.

Example 2

A spunbonded nonwoven fabric having a weight per unit area of 76 g/m$^2$, a thickness of 0.09 mm, a boiling water shrinkage in the longitudinal direction of 1.0%, a water absorption time of 60 seconds or more, and a Bekk smoothness of a back surface of 14 seconds was prepared as the separation membrane support in the same manner as in Example 1 except that the speed ratio of the cooling rolls to the three flat rolls was 1.02 in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.995, and the produced separation membrane had a membrane peel strength of 44 cN/15 mm. Table 1 and Table 2 show the results.

Example 3

A spunbonded nonwoven fabric having a weight per unit area of 76 g/m$^2$, a thickness of 0.09 mm, a boiling water shrinkage in the longitudinal direction of 1.8%, a water absorption time of 60 seconds or more, and a Bekk smoothness of a back surface of 13 seconds was prepared as the separation membrane support in the same manner as in Example 1 except that the cooling rolls had a surface temperature of 90°C, and the speed ratio of the cooling rolls to the three flat rolls was 1.02 in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.992, and the produced separation membrane had a membrane peel strength of 36 cN/15 mm. Table 1 and Table 2 show the results.

Reference Example 4

Nonwoven fabric made by papermaking process

A polyethylene terephthalate resin having a melting point of 260°C was used to prepare a nonwoven fabric (b) made by papermaking process, having a fiber diameter of 11 $\mu$m, a weight per unit area of 36 g/m$^2$, and a thickness of 0.15 mm. Separately, a polyethylene terephthalate resin having a melting point of 260°C was used to prepare a nonwoven fabric (c) made by papermaking process, having a fiber diameter of 14 $\mu$m, a weight per unit area of 36 g/m$^2$, and a thickness of 0.17 mm.

Thermocompression bonding of laminate

The nonwoven fabric (b) and the nonwoven fabric (c), both prepared by papermaking process as above, were placed so that the paper-made nonwoven fabric (b) would be the top. As shown in Fig. 2, a pair of flat rolls comprising an upper metal roll (3) and a lower cotton paper elastic roll (9) having a hardness (Shore D) of 85 were used, and the nonwoven fabric laminate was passed between the flat rolls and thereby bonded by thermocompression. The thermocompression-bonded nonwoven fabric laminate (1) was passed between a pair of upper and lower metal cooling rolls (5, 6) each at a surface temperature of 90°C so as to form an "S" shape. First, the surface (back surface) (7), which had been in contact with the elastic roll (9), of the thermocompression-bonded nonwoven fabric laminate (1) was brought into contact with the upper roll (5) for 0.3 second; and subsequently, the surface (front surface) (8), which had been in contact with the metal roll (3), of the thermocompression-bonded nonwoven fabric laminate (1) was brought into contact with the lower roll (6) for 0.3 second (that is, the thermocompression-bonded nonwoven fabric laminate (1) was in contact with the cooling rolls for 0.6 second in total), thus yielding a laminated nonwoven fabric made by papermaking process, having a weight per unit area of 72 g/m$^2$, a thickness of 0.09 mm, a boiling water shrinkage in the longitudinal direction of 1.1%, a remaining oil agent content of 0.04%, a water absorption time of 18 seconds, and a Bekk smoothness of a back surface of 18 seconds as the separation membrane support. At this time, as for the surface temperatures of the pair of flat rolls, the upper roll (3) had a surface temperature of 230°C, and the lower roll (9) had a surface temperature of 120°C. The linear pressure was 1,274 N/cm. The speed ratio of the cooling rolls (5, 6) to the pair of flat rolls (3, 9) was 1.01. The obtained separation membrane support was used to form a polysulfone membrane in the same manner as in Example 1. At this time, no bleed-through of the cast liquid was observed, the ratio of the formed separation membrane length/the wound off support length was 0.994, and the produced separation membrane had a membrane peel strength of 21 cN/15 mm. Table 1 and Table 2 show the results.

Example 5

Spinning, collection of fibrous web

A polyethylene terephthalate resin that had been dried to a water content of 10 ppm and had an intrinsic viscosity IV of 0.65, a melting point of 260°C, and a titanium oxide content of 0.3% by mass was melted at a temperature of 295°C and extruded from pores at a spinneret temperature of 300°C. The extruded resin was then spun with a rectangular ejector having slits in the width direction of a nonwoven fabric at a spinning speed of 4,400 m/min, thus yielding filaments (with a round cross section). The filament group was sprayed and collected on a moving net conveyor as fibrous webs. The discharge rate was adjusted so that a spunbonded nonwoven fabric layer (d) would have a weight per unit area of 30 g/m$^2$.

Subsequently, a polyethylene terephthalate resin that had been dried to a water content of 10 ppm and had an intrinsic viscosity IV of 0.50 and a melting point of 260°C was melted at a temperature of 295°C and extruded from pores at a spinneret temperature of 300°C. The extruded resin was then spun and sprayed by blowing heated air at 1,000 Nm$^3$/hr/m and collected as a meltblown nonwoven fabric layer (e) on the spunbonded nonwoven fabric layer (d) on the moving net conveyor. The discharge rate was adjusted so that the meltblown nonwoven fabric layer (e) would have a weight per unit area of 10 g/m$^2$.

A spunbonded nonwoven fabric layer (f) was collected on the meltblown nonwoven fabric layer (e) in the same conditions as in the formation of the spunbonded nonwoven fabric layer (d). The discharge rate was adjusted so that the spunbonded nonwoven fabric layer (f) would have a weight per unit area of 30 g/m$^2$.

Preliminary thermocompression bonding

The collected fibrous web laminate was passed between a metal flat roll and a net conveyor at a surface temperature of the flat roll of 180°C and a linear pressure of 294 N/cm to undergo preliminary thermocompression bonding, thus yielding a composite nonwoven fabric of temporarily bonded spunbonded/meltblown/spunbonded non-woven fabrics having a weight per unit area of 70 g/m$^2$ and a thickness of 0.35 mm.

Thermocompression bonding of laminate

As shown in Fig. 2, a pair of flat rolls comprising an upper metal roll (3) and a lower cotton paper elastic roll (9) having a hardness (Shore D) of 75 were used, and the obtained temporarily bonded composite nonwoven fabric was passed between the flat rolls and thereby bonded by thermocompression. The thermocompression-bonded nonwoven fabric laminate (1) was passed between a pair of upper and lower metal cooling rolls (5, 6) each at a surface temperature of 40°C so as to form an "S" shape. First, the surface (back surface) (7), which had been in contact with elastic roll (9), of the thermocompression-bonded nonwoven fabric laminate (1) was brought into contact with the upper roll (5) for 0.5 second; and subsequently, the surface (front surface) (8), which had been in contact with the metal roll (3), of the thermocompression-bonded nonwoven fabric laminate (1) was brought into contact with the lower roll (6) for 0.5 second (that is, the thermocompression-bonded nonwoven fabric laminate (1) was in contact with the cooling rolls for 1.0 second in total), thus yielding a composite nonwoven fabric having a weight per unit area of 70 g/m$^2$, a thickness of 0.09 mm, a boiling water shrinkage in the longitudinal direction of 1.0%, a water absorption time of 60 seconds or more, and a Bekk smoothness of a back surface of 20 seconds as the separation membrane support. At this time, as for the surface temperatures of the pair of flat rolls, the upper roll (3) had a surface temperature of 230°C, and the lower roll (9) had a surface temperature of 130°C. The linear pressure was 1,519 N/cm. The speed ratio of the cooling rolls (5, 6) to the pair of flat rolls (3, 9) was 1.01.

Formation of separation membrane

Polysulfone membrane

The obtained separation membrane support was used to form a polysulfone membrane in the same manner as in Example 1. At this time, no bleed-through of the cast liquid was observed, the ratio of the formed separation membrane length/the wound off support length was 0.994, and the produced separation membrane had a membrane peel strength of 30 cN/15 mm. Table 1 and Table 2 show the results.

Example 6

A spunbonded nonwoven fabric having a weight per unit area of 76 g/m$^2$, a thickness of 0.09 mm, a boiling water shrinkage in the longitudinal direction of 0.8%, a water absorption time of 60 seconds or more, and a Bekk smoothness of a back surface of 17 seconds was prepared as the separation membrane support in the same manner as in Example 1 except that the sheath component used was a polybutylene terephthalate resin that had been dried to a water content of 10 ppm and had a melting point of 220°C. On the separation membrane support, a polysulfone membrane was formed in the same manner as in Example 1. At this time, no bleed-through of the cast liquid was observed, the ratio of the formed separation membrane length/the wound off support length was 0.992, and the produced separation membrane had a membrane peel strength of 34 cN/15 mm. Table 1 and Table 2 show the results.

Example 7

A spunbonded nonwoven fabric having a weight per unit area of 76 g/m$^2$, a thickness of 0.09 mm, a boiling water shrinkage in the longitudinal direction of 0.5%, a water absorption time of 60 seconds or more, and a Bekk smoothness of a back surface of 15 seconds was prepared as the separation membrane support in the same manner as in Example 1 except that the metal roll of the three flat rolls had a temperature of 190°C in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.996, and the produced separation membrane had a membrane peel strength of 51 cN/15 mm. Table 1 and Table 2 show the results.

Example 8

A spunbonded nonwoven fabric having a weight per unit area of 76 g/m$^2$, a thickness of 0.09 mm, a boiling water shrinkage in the longitudinal direction of 0.6%, a water absorption time of 60 seconds or more, and a Bekk smoothness of a back surface of 15 seconds was prepared as the separation membrane support in the same manner as in Example 1 except that the metal roll of the three flat rolls had a temperature of 200°C in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.994, and the produced separation membrane had a membrane peel strength of 42 cN/15 mm. Table 1 and Table 2 show the results.

Comparative Example 1

A spunbonded nonwoven fabric having a weight per unit area of 76 g/m$^2$, a thickness of 0.09 mm, a boiling water shrinkage in the longitudinal direction of 2.3%, a water absorption time of 60 seconds or more, and a Bekk smoothness of a back surface of 12 seconds was prepared as the separation membrane support in the same manner as in Example 1 except that the cooling rolls had a surface temperature of 90°C, and the speed ratio of the cooling rolls to the three flat rolls was 1.03 in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.988, and the produced separation membrane had a membrane peel strength of 18 cN/15 mm. Table 1 and Table 2 show the results.

Comparative Example 2

Nonwoven fabric made by papermaking process

A polyethylene terephthalate resin having a melting point of 260°C was used to prepare a nonwoven fabric (g) made by papermaking process, having a fiber diameter of 11 $\mu$m, a weight per unit area of 37 g/m$^2$, and a thickness of 0.16 mm. Separately, a polyethylene terephthalate resin having a melting point of 260°C was used to prepare a nonwoven fabric (h) made by papermaking process, having a fiber diameter of 10 $\mu$m, a weight per unit area of 37 g/m$^2$, and a thickness of 0.17 mm.

Thermocompression bonding of laminate

The nonwoven fabric (g) and the nonwoven fabric (h), both prepared by papermaking process as above, were placed so that the nonwoven fabric (g) would be the top. As shown in Fig. 2, a pair of flat rolls comprising an upper metal roll (3) and a lower cotton paper elastic roll (9) having a hardness (Shore D) of 85 were used, and the nonwoven fabric laminate was passed between the flat rolls and thereby bonded by thermocompression. The thermocompression-bonded nonwoven fabric laminate (1) was passed between a pair of upper and lower metal cooling rolls (5, 6) each at a surface temperature of 110°C so as to form an "S" shape. First, the surface (back surface) (7), which had been in contact with elastic roll (9), of the thermocompression-bonded nonwoven fabric laminate (1) was brought into contact with the upper roll (5) for 0.3 second; and subsequently, the surface (front surface) (8), which had been in contact with the metal roll (3), of the thermocompression-bonded nonwoven fabric laminate (1) was brought into contact with the lower roll (6) for 0.3 second (that is, the thermocompression-bonded nonwoven fabric laminate (1) was in contact with the cooling rolls for 0.6 second in total), thus yielding a laminated nonwoven fabric made by papermaking process, having a weight per unit area of 74 g/m$^2$, a thickness of 0.09 mm, a boiling water shrinkage in the longitudinal direction of 2.4%, a remaining oil agent content of 0.1%, a water absorption time of 16 seconds, and a Bekk smoothness of a back surface of 18 seconds as a separation membrane support. At this time, as for the surface temperatures of the pair of flat rolls, the upper roll (3) had a surface temperature of 235°C, and the lower roll (9) had a surface temperature of 130°C. The linear pressure was 1,176 N/cm. The speed ratio of the cooling rolls (5, 6) to the pair of flat rolls (3, 9) was 1.02. The obtained separation membrane support was used to form a polysulfone membrane in the same manner as in Example 1. At this time, no bleed-through of the cast liquid was observed, and the produced separation membrane had a membrane peel strength of 15 cN/15 mm. Table 1 and Table 2 show the results.

Comparative Example 3

A spunbonded nonwoven fabric having a weight per unit area of 76 g/m$^2$, a thickness of 0.09 mm, a boiling water shrinkage in the longitudinal direction of 2.2%, a water absorption time of 60 seconds or more, and a Bekk smoothness of a back surface of 12 seconds was prepared as the separation membrane support in the same manner as in Example 1 except that no cooling roll was used in the thermocompression bonding of the laminate. On the separation membrane support, a polysulfone membrane was formed in the same manner as in Example 1. At this time, no bleed-through of the cast liquid was observed, the ratio of the formed separation membrane length/the wound off support length was 0.989, and the produced separation membrane had a membrane peel strength of 19 cN/15 mm. Table 1 and Table 2 show the results.

TABLE 1

| | | | | Example 1 | Example 2 | Example 3 | Example 4 | Example 5 | Example 6 | Example 7 | Example 8 | Comp. Example 1 | Comp. Example 2 | Comp. Example 3 |
|---|---|---|---|---|---|---|---|---|---|---|---|---|---|---|
| 1st layer | Nonwoven fabric type *1 | | | SB | SB | SB | PM | SB | SB | SB | SB | SB | PM | SB |
| | Fiber composition | Core component | Resin type *2 | PET | PET | PET | PET | PET | PET | PET | PET | PET | PET | PET |
| | | | Melting point (°C.) | 260 | 260 | 260 | 260 | 260 | 260 | 260 | 260 | 260 | 260 | *260* |
| | | Sheath component | Resin type *2 | co-PET | co-PET | co-PET | | | PBT | co-PET | co-PET | co-PET | | *co-PET* |
| | | | Melting point (°C) | 230 | 230 | 230 | | | 220 | 230 | 230 | 230 | | 230 |
| | | Sheath component ratio (% by mass) | | 20 | 20 | 20 | | 0 | 20 | 20 | 20 | 20 | | 20 |
| | Spinning speed (m/min) | | | 4400 | 4400 | 4400 | | 4400 | 4400 | 4400 | 4400 | 4400 | | 4400 |
| | Preliminary | Temperature (°C.) | Upper roll | 140 | 140 | 140 | | 180 | 140 | 140 | 140 | 140 | | 140 |
| | thermocompression | | Lower roll | 140 | 140 | 140 | | 180 | 140 | 140 | 140 | 140 | | 140 |
| | bonding condition | Linear pressure (N/cm) | | 588 | 588 | 588 | | 588 | 588 | 588 | 588 | 588 | | 588 |
| | Fiber diameter (μm) | | | 10 | 10 | 10 | 11 | 10 | 10 | 10 | 10 | 10 | 11 | 10 |
| | Weight per unit area (g/m²) | | | 38 | 39 | 38 | 36 | 30 | 38 | 36 | 38 | 38 | 37 | 38 |

EP 2 818 229 B1

| | | | | Example 1 | Example 2 | Example 3 | Example 4 | Example 5 | Example 6 | Example 7 | Example 8 | Comp. Example 1 | Comp. Example 2 | Comp. Example 3 |
|---|---|---|---|---|---|---|---|---|---|---|---|---|---|---|
| 2nd layer | Nonwoven fabric type *1 | | | SB | SB | SB | PM | MB | SB | SB | SB | SB | PM | SB |
| | Fiber composition | Core component | Resin type *2 | PET | PET | PET | PET | PET | PET | PET | PET | PET | PET | PET |
| | | | Melting point (°C.) | 260 | 260 | 260 | 260 | 260 | 260 | 260 | 260 | 260 | 260 | 260 |
| | | Sheath component | Resin type *2 | co-PET | co-PET | co-PET | | | PBT | co-PET | co-PET | co-PET | | co-PET |
| | | | Melting point (°C.) | 230 | 230 | 230 | | | 220 | 230 | 20 | 230 | | 230 |
| | | Sheath component ratio (% by mass) | | 20 | 20 | 20 | | 0 | 20 | 20 | 20 | 20 | | 20 |
| | Spinning speed (m/min) | | | 4400 | 4400 | 4400 | | 4400 | 4400 | 4400 | 4400 | 4400 | | 4400 |
| | Preliminary thermocompression bonding condition | Temperature (°C.) | Upper roll | 140 | 140 | 140 | | 180 | 140 | 140 | 140 | 140 | | 140 |
| | | | Lower roll | 140 | 140 | 140 | | 180 | 140 | 140 | 140 | 140 | | 140 |
| | | Linear pressure (N/cm) | | 588 | 588 | 588 | | 588 | 588 | 588 | 588 | 588 | | 588 |
| | Fiber diameter ($\mu$m) | | | 10 | 10 | 10 | 14 | 4 | 10 | 10 | 10 | 10 | 10 | 10 |
| | Weight per unit area (g/m$^2$) | | | 38 | 38 | 38 | 36 | 10 | 38 | 38 | 38 | 38 | 37 | 38 |

|  |  |  |  | Example 1 | Example 2 | Example 3 | Example 4 | Example 5 | Example 6 | Example 7 | Example 8 | Comp. Example 1 | Comp. Example 2 | Comp. Example 3 |
|---|---|---|---|---|---|---|---|---|---|---|---|---|---|---|
| 3rd layer | Nonwoven fabric type *1 |  |  |  |  |  |  | SB |  |  |  |  |  |  |
|  | Fiber composition | Core component | Resin type *2 |  |  |  |  | PET |  |  |  |  |  |  |
|  |  |  | Meltingpoint (°C.) |  |  |  |  | 260 |  |  |  |  |  |  |
|  |  | Sheath component | Resin type *2 |  |  |  |  |  |  |  |  |  |  |  |
|  |  |  | Melting point (° C.) |  |  |  |  |  |  |  |  |  |  |  |
|  |  | Sheath component ratio (% by mass) |  |  |  |  |  | 0 |  |  |  |  |  |  |
|  | Spinning speed (m/min) |  |  |  |  |  |  | 4400 |  |  |  |  |  |  |
|  | Preliminary thermocompression bonding condition | Temperature (° C.) | Upper roll |  |  |  |  | 180 |  |  |  |  |  |  |
|  |  |  | Lower roll |  |  |  |  | 180 |  |  |  |  |  |  |
|  |  | Linear pressure (N/cm) |  |  |  |  |  | 588 |  |  |  |  |  |  |
|  | Fiber diameter (μm) |  |  |  |  |  |  | 10 |  |  |  |  |  |  |
|  | Weight per unit area (g/m$^2$) |  |  |  |  |  |  | 30 |  |  |  |  |  |  |

*1 SB: spynbonded nonwoven fabric. MB: meltbrown nonwoven fabric. PM: Nonwoven fabric made by papermaking process *2 PET: polyethylene terephthalate, co-PET. copolymerized polyethylene terephthalate, PBT: polybutylene terephthalate

EP 2 818 229 B1

TABLE 2

| | Example 1 | Example 2 | Example 3 | Example 4 | Example 5 | Example 6 | Example 7 | Example 8 | Comp. Example 1 | Comp. Example 2 | Comp. Example 3 |
|---|---|---|---|---|---|---|---|---|---|---|---|
| **Separation membrane support** | | | | | | | | | | | |
| Number of laminated layers | | | | | | | | | | | |
| Thermocompression condition — Flat roll / Number of rolls | 1 / 3 / 1 | 1 / 3 / 1 | 1 / 3 / 1 | 1 / 3 / 1 | 1 / 1 / 1 | 1 / 3 / 1 | 1 / 3 / 1 | 1 / 3 / 1 | 1 / 3 / 1 | 1 / 3 / 1 | 1 / 3 / 1 |
| Roll type — Upper / Middle / Lower | Elastic / Metal / Elastic | Elastic / Metal / Elastic | Elastic / Metal / Elastic | Metal / — / Elastic | Metal / — / Elastic | Elastic / Metal / Elastic | Elastic / Metal / Elastic | Elastic / Metal / Elastic | Elastic / Metal / Elastic | Metal / — / Elastic | Elastic / Metal / Elastic |
| Elastic roll hardness (Shore D) — Upper / Lower | 91 / 75 | 91 / 75 | 91 / 75 | 85 | 85 | 91 / 75 | 91 / 75 | 91 / 75 | 91 / 75 | 85 | 91 / 75 |
| Roll temperature (°C) — Upper / Middle / Lower | 100±5 / 180±2 / 130±5 / 171.5 | 100±5 / 180±2 / 130±5 / 171.5 | 100±5 / 180±2 / 130±5 / 171.5 | 230±2 / 120±5 / 137.4 | 230±2 / 120±5 / 135.9 | 100±5 / 180±2 / 130±5 / 171.5 | 100±5 / 200±2 / 130±5 / 171.5 | 100±5 / 180±2 / 130±5 / 171.5 | 100±5 / 180±2 / 130±5 / 171.5 | 225±2 / 180±5 / 176 | 100±5 / 180±2 / 130±5 / 171.5 |
| Linear pressure (N/cm) | 60 | 60 | 60 | 60 | 40 | 60 | 46 | 46 | 46 | 40 | 46 |
| Cooling mill temperature (°C) | 1.0 | 1.0 | 1.0 | 0.9 | 1.0 | 1.0 | 1.0 | 1.0 | 1.0 | 0.6 | — |
| Contact time of nonwoven fabric and cooling roll (sec) | 1.00 | 1.02 | 1.02 | 1.01 | 1.01 | 1.00 | 1.00 | 1.00 | 1.02 | 1.02 | — |
| Speed ratio of cooling mill to flat mill | 76 | 76 | 76 | 72 | 76 | 76 | 76 | 76 | 76 | 74 | 76 |
| Weight per unit area (g/m²) | 0.09 | 0.09 | 0.09 | 0.09 | 0.09 | 0.09 | 0.09 | 0.09 | 0.09 | 0.09 | 0.09 |
| Thickness (mm) | 0.4 | 1.0 | 1.4 | 1.1 | 1.0 | 0.4 | 6.0 | 2.3 | 2.3 | 2.4 | 2.1 |
| Boiling water shrinkage (%) | x60 | x60 | x60 | 18 | x60 | x60 | x60 | 12 | 12 | 8.0 | x60 |
| Water absorption time (sec) | 13 | 14 | 13 | 19 | 20 | 17 | 15 | 12 | 12 | 8.8 | 13 |
| Peak smoothness of back surface (sec) | 5 | 5 | 5 | 5 | 5 | 5 | 4 | 4 | 5 | 5 | 5 |
| Ratio of formed separation membrane length to wound roll support length | 0.998 | 0.995 | 0.995 | 0.994 | 0.994 | 0.992 | 0.994 | 0.994 | 0.998 | 0.987 | 0.988 |
| Membrane peel strength (cN/15 mm) | 54 | 48 | 58 | 21 | 58 | 34 | 62 | 18 | 18 | 15 | 18 |
| **Separation membrane** — Separation membrane dispersion amount (ppm) | 31 | 33 | 33 | 39 | 40 | 36 | 34 | 39 | 39 | 48 | 38 |

Characteristics of the separation membrane support and the separation membrane obtained are as shown in Table 1 and Table 2. Each separation membrane of Comparative Example 1, Comparative Example 2, and Comparative Example 3 was used to produce a spiral fluid separation elements as described in paragraph [0079] and indicated good processability. However, each fluid separation element produced and subjected to the durability test as described in paragraph [0080] showed partial membrane peeling. The depression amounts of the separation membranes of Comparative Examples 1, 2, and 3 into a permeated liquid flow path material were 39 $\mu$m, 48 $\mu$m, and 38 $\mu$m, respectively.

In contrast, each separation membrane of Examples 1 to 3 and 5 to 8 of the present invention as well as Reference Example 4 was used to produce a spiral fluid separation element as described in paragraph [0079] and indicated good processability. Each fluid separation element produced and subjected to the durability test as described in paragraph [0080] showed good membrane adhesion state and the depression amount of each separation membrane into a permeated liquid flow path material was small. The results indicated excellent durability.

**Claims**

1. A separation membrane support comprising a spunbonded nonwoven fabric composed of fibers made from a polyester polymer, and having a boiling water shrinkage of -0.2 to 2.0% in the length direction (longitudinal direction) after treatment in boiling water for 5 minutes.

2. The separation membrane support according to claim 1, wherein the nonwoven fabric has a water absorption time of 15 seconds or more determined in accordance with 7.1 (Water absorption speed method), 7.1.1 (Dropping method) in JIS L 1907: 2010 "Testing methods for water absorbency of textiles."

3. The separation membrane support according to claim 1 or 2, wherein the nonwoven fabric has a back surface having a Bekk smoothness of 5 to 35 seconds determined in accordance with JIS P 8119: 1998 "Paper and board-Determination of smoothness by Bekk method."

4. A method for producing a separation membrane support composed of a spunbonded nonwoven fabric composed of fibers made from a polyester polymer according to any one of claims 1 to 3, the method comprising:

    bonding a nonwoven fabric by thermocompression with thermocompression-bonding rolls for integrating a nonwoven fabric; and then
    bringing the nonwoven fabric into contact with a cooling roll at a speed ratio of 0.98 to 1.02 relative to that of the thermocompression-bonding roll.

5. The method for producing a separation membrane support according to claim 4, wherein the cooling roll has a surface temperature of 20 to 100°C.

6. The method for producing a separation membrane support according to claim 4 or 5, wherein the nonwoven fabric is in contact with the cooling roll for 0.5 to 2.0 seconds.

7. A separation membrane comprising a separation membrane support according to any one of claims 1 to 3 and the separation membrane prepared by forming a membrane having a separation function on a surface of the separation membrane support.

8. The separation membrane according to claim 7, which has a membrane peel strength of 20 to 75 cN/15 mm.

9. A fluid separation element comprising the separation membrane according to claim 7 or 8 as a constituent.

**Patentansprüche**

1. Ein Trennmembranträger umfassend einen spinngebundenen Vliesstoff, zusammengesetzt aus Fasern, die aus einem Polyesterpolymer hergestellt sind und eine Siedewasserschrumpfung von -0,2 bis 2,0% nach Behandlung in kochendem Wasser für 5 Minuten in Längenrichtung (longitudinale Richtung) aufweisen.

2. Der Trennmembranträger nach Anspruch 1, wobei der Vliesstoff eine Wasserabsorptionszeit von 15 Sekunden oder mehr, bestimmt gemäß 7.1 (Wasserabsorptionsgeschwindigkeitsverfahren), 7.1.1 (Tropfverfahren) von JIS L 1907: 2010 "Prüfverfahren für die Wasserabsorptionsfähigkeit von Textilien", aufweist.

3. Der Trennmembranträger nach Anspruch 1 oder 2, wobei der Vliesstoff eine Rückseitenfläche mit einer Bekk-Glätte von 5 bis 35 Sekunden, bestimmt gemäß JIS P 8119: 1998 "Papier und Karton-Ermittlung der Glätte nach Bekk-Methode", aufweist.

**4.** Ein Verfahren zur Herstellung eines Trennmembranträgers der aus einem spinngebundenen Vliesstoff aufgebaut ist, welcher aus Fasern zusammengesetzt ist, die aus einem Polyesterpolymer nach einem der Ansprüche 1 bis 3 hergestellt sind, wobei das Verfahren folgende Schritte umfasst:

das Binden eines Vliesstoffs durch Thermokompression mit Thermokompressions-Bindewalzen zur Integration eines Vliesstoffs; und danach
das in Kontakt bringen des Vliesstoffs mit einer Kühlwalze, bei einem Geschwindigkeitsverhältnis von 0,98 bis 1,02 relativ zur Geschwindigkeit der Thermokompressions-Bindewalze.

**5.** Das Verfahren zur Herstellung eines Trennmembranträgers nach Anspruch 4, **dadurch gekennzeichnet, dass** die Kühlwalze eine Oberflächentemperatur von 20 bis 100°C aufweist.

**6.** Das Verfahren zur Herstellung eines Trennmembranträgers nach Anspruch 4 oder 5, wobei der Vliesstoff für 0,5 bis 2,0 Sekunden mit der Kühlwalze in Kontakt steht.

**7.** Eine Trennmembran umfassend einen Trennmembranträger nach einem der Ansprüche 1 bis 3 und die Trennmembran hergestellt ist durch binden einer Membran, die eine Trennfunktion hat, auf einer Oberfläche des Trennmembranträgers.

**8.** Die Trennmembran nach Anspruch 7, die eine Membran-Abschälfestigkeit von 20 bis 75 cN/15 mm aufweist.

**9.** Ein Fluidtrennungselement umfassend die Trennmembran nach Anspruch 7 oder 8 als einen Bestandteil.

## Revendications

**1.** Support de membrane de séparation comprenant une étoffe non tissée filée-liée composée de fibres faites en un polymère de polyester, et ayant un retrait à l'eau bouillante de -0,2 à 2,0 % dans la direction de la longueur (direction longitudinale) après traitement dans de l'eau bouillante pendant 5 minutes.

**2.** Support de membrane de séparation selon la revendication 1, dans lequel l'étoffe non tissée a un temps d'absorption d'eau de 15 secondes ou plus, déterminé conformément aux paragraphes 7.1 (méthode de vitesse d'absorption d'eau) et 7.1.1 (méthode de chute) de la norme JIS L 1907 : 2010 « Méthodes de test pour la capacité d'absorption d'eau de textiles ».

**3.** Support de membrane de séparation selon la revendication 1 ou 2, dans lequel l'étoffe non tissée a une surface d'envers ayant un lissé de 5 à 35 secondes, déterminé conformément à la norme JIS P 8119 : 1998 « Détermination de lissé du papier et du carton par la méthode Bekk ».

**4.** Procédé pour produire un support de membrane de séparation composé d'une étoffe non tissée filée-liée composée de fibres faites en un polymère de polyester selon l'une quelconque des revendications 1 à 3, le procédé comprenant :

le collage d'une étoffe non tissée par thermocompression avec des rouleaux de soudage par thermocompression à des fins d'intégration d'une étoffe non tissée ; et ensuite
la mise en contact de l'étoffe non tissée avec un rouleau refroidisseur à un rapport de vitesse de 0,98 à 1,02 par rapport à celle du rouleau de soudage par thermocompression.

**5.** Procédé pour produire un support de membrane de séparation selon la revendication 4, dans lequel le rouleau refroidisseur a une température de surface de 20 à 100 °C.

**6.** Procédé pour produire un support de membrane de séparation selon la revendication 4 ou 5, dans lequel l'étoffe non tissée est en contact avec le rouleau refroidisseur pendant 0,5 à 2,0 secondes.

**7.** Membrane de séparation comprenant un support de membrane de séparation selon l'une quelconque des revendications 1 à 3 et la membrane de séparation préparée par formation d'une membrane ayant une fonction de séparation sur une surface du support de membrane de séparation.

**8.** Membrane de séparation selon la revendication 7, qui a une résistance au pelage de la membrane de 20 à 75 cN/15 mm.

**9.** Elément de séparation de fluide comprenant la membrane de séparation selon la revendication 7 ou 8 à titre de constituant.

[Fig. 1]

[Fig. 2]

**EP 2 818 229 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9740224 A1
- JP 2011212602 A
- JP 4021526 B
- JP 3153487 B
- JP 2009061373 A
- JP 2001017842 A